# EUROPÄISCHE PATENTSCHRIFT

(11) **EP 1 318 451 B1**
(45) Veröffentlichungstag und Bekanntmachung des Hinweises auf die Patenterteilung: **06.10.2004**
(21) Anmeldenummer: 01129442.8
(22) Anmeldetag: 10.12.2001
(51) Int. Cl.: G06F 9/445

(54) **Verfahren zum Ausführen eines Programms auf einem Computer**
Method to execute a program on a computer
Méthode pour exécuter un programme sur un ordinateur

(43) Veröffentlichungstag der Anmeldung: 11.06.2003
(73) Patentinhaber: Aladdin Knowledge Systems GmbH& Co. KG, 82110 Germering (DE)
(72) Erfinder: Jascau, Adrian, 81476 Munchen (DE); Guja, Horatiu, 3400 Cluj-Napoca, Cluj (RO); Zunke, Michael, 85609 Aschheim (DE)
(74) Vertreter: Grimm, Christian Jan Rainer

(56) Entgegenhaltungen:
- EP-A- 0 866 612
- WO-A-01/61486
- WO-A-99/07007
- US-A- 5 708 811
- US-A- 5 765 205
- US-A- 6 049 853

## Beschreibung

Die Erfindung bezieht sich auf ein Verfahren zum Ausführen eines Programms auf einem Computer sowie auf ein Computerprogrammprodukt.

Häufig ist es gewünscht, ausführbare Programme noch nachträglich mit einer zusätzlichen Funktion zu versehen, wie z. B. einem Softwarekopierschutz, der die Ausführung des Programms nur bei Vorliegen einer Lizenz ermöglicht. Dazu kann das Programm oder Teile davon verschlüsselt werden und eine Entschlüsselung erfolgt nur dann, wenn die Lizenz vorhanden ist. Das Hinzufügen der Funktion wird mit einem sogenannten automatischen Einbinden bzw. Umhüllen durchgeführt, bei dem ein verändertes ausführbares Programm erzeugt wird, das nun die zusätzliche Funktion aufweist. Ein Nachteil dieser automatischen Einbindung besteht darin, daß das Durchführen der zusätzlichen Funktion, also das Entschlüsseln, für das gesamte Programm bei Aufruf des Programmes durchgeführt werden muß. Dadurch wird die Programmladezeit drastisch vergrößert.

Auch beim Herunterladen eines Programmes von einem Server auf einen Computer besteht der Nachteil der langen Startzeit, da das herunterzuladende Programm erst dann auf dem Computer gestartet werden kann, wenn es vollständig zum Computer übertragen wurde. Da heutige Programme häufig einige 10 bis einige 100 Megabyte groß sind, ist das Herunterladen von Programmen für viele Anwender aufgrund der langen Übertragungszeit uninteressant.

Aus WO 00/05637 A2 ist das kontinuierliche und transparente Herunterladen von einer Anwendung zugeordneten Modulen bekannt, wobei eine Ladereihenfolge der einzelnen Module nach vorbestimmten Kriterien festgelegt wird. Für das Herunterladen der Module der Anwendung wird ein eigenes Programm benötigt, das seinerseits, sofern es nicht auf dem Computer vorhanden ist, auch heruntergeladen werden muß. Dadurch wird nachteilig der Zeitaufwand zum Herunterladen der Anwendung erhöht.

Ausgehend hiervon ist es Aufgabe der vorliegenden Erfindung, ein Verfahren zum Ausführen eines Programms auf einem Computer bereitzustellen, mit dem die Zeitdauer zwischen einem Auswählen des Programms und dem Zeitpunkt, zu dem das Programm einsetzbar ist, verkürzt werden kann.

Die Aufgabe wird durch ein Verfahren zum Ausführen eines Programms auf einem Computer mit einem in (bevorzugt gleich große) Speicherseiten unterteilten Hauptspeicher gelöst, wobei das Programm mehrere Programmblöcke in Größe der Speicherseiten sowie einen Hauptabschnitt mit einem Manipulationsmodul enthält und das Verfahren folgende Schritte aufweist:
Laden des Hauptabschnitts in den Hauptspeicher und Ausführen des Hauptabschnitts, dessen Manipulationsmodul bei Vorhanden sein der erforderlichen Lizenz eine Manipulation eines der Programmblöcke dann bewirk, wenn bei einem versuchten Zugriff auf den einen Programmblock ein vorbestimmter Seitenfehler erzeugt wird.

Somit kann die Manipulation des einen (ersten) Programmblocks, die beispielsweise ein Laden von diesem in den Hauptspeicher und/oder ein Entschlüsseln des ersten Programmblocks umfaßt, erst dann durchgeführt werden, wenn der erste Programmblock auch tatsächlich während des Programmablaufs benötigt wird. Daher muß nicht mehr das gesamte Programm beim Start entsprechend der gewünschten Funktion manipuliert werden, sondern es wird eine Manipulation immer nur von den Programmabschnitten bzw. -blöcken durchgeführt, die gerade tatsächlich benötigt werden.

Eine bevorzugte Weiterbildung des erfindungsgemäßen Verfahrens besteht darin, daß bei der Manipulation neben der Manipulation des einen Programmblocks auch noch zumindest ein weiterer der Programmblöcke manipuliert wird. Bei diesem weiteren Programmblock handelt es sich beispielsweise um einen Programmblock, der zusammen mit dem einen Programmblock ausgeführt wird. Dadurch wird eine effektive Manipulation erreicht, da verbundene Programmblöcke zusammen manipuliert werden.

Insbesondere kann die Manipulation nur dann bewirkt werden, wenn während der Programmausführung noch kein Code des einen Programmblocks ausgeführt wurde. Damit kann in vorteilhafter Weise sichergestellt werden, daß die Manipulation des/der Programmblöcke nur ein einziges Mal durchgeführt wird, so daß eine nicht gewünschte, mehrmalige Manipulation, die zu einer Verlangsamung der Programmausführung führt, verhindert werden kann.

Alternativ kann natürlich die Manipulation auch jedesmal durchgeführt werden, wenn der vorbestimmte Seitenfehler mehrmals während der Programmausführung auftritt. Dann kann es sich beispielsweise bei der Manipulation darum handeln, daß die Programmausführung nur dann fortgesetzt wird, wenn eine Lizenz (die z. B. an das Vorhandensein eines Kopierschutzsteckers am Computer gebunden ist) vorhanden ist.

Unter Seitenfehler wird hier jede Unterbrechung der Programmausführung verstanden, die bei Zugriff auf die Speicherseite des Hauptspeichers, in der der erste Programmblock gespeichert ist, auftritt oder die deshalb vorkommt, weil der erste Programmblock gar nicht im Hauptspeicher abgelegt ist. Anders gesagt tritt ein Seitenfehler immer dann auf, wenn während der Programmausführung auf einen Programmblock, auf den im Zuge der Programmausführung zugegriffen werden muß, nicht zugegriffen werden kann.

In einer bevorzugten Ausgestaltung des erfindungsgemäßen Verfahrens ist auf dem Computer ein Betriebssystem mit einem Exception-Handler installiert, wobei beim versuchten Zugriff die Programmausführung unterbrochen und der Seitenfehler dem Exception-Handler mitgeteilt und von diesem an das Manipulationsmodul weitergeleitet wird, das die Manipulation und dabei auch eine Behebung des den Seitenfehler bedingenden Zustandes bewirkt und danach dies dem Exception-Handler mitteilt.

Der Seitenfehler kann dabei ein Seitenfehler sein, der vom Exception-Handler behoben oder nicht behoben werden kann. Wenn es sich um einen Seitenfehler handelt, der nicht vom Exception-Handler behoben werden kann, wird somit das Betriebssystem in einen derartigen Ausnahmezustand versetzt, daß es die Unterstützung des Programms selbst benötigt, um den Seitenfehler zu behandeln und die Fortführung des Programms gewährleisten zu können. Die Ladereihenfolge der einzelnen Programmblöcke wird somit beim erfindungsgemäßen Verfahren nicht vom Programm vorgegeben, sondern vom Betriebssystem bestimmt, so daß die Verwirklichung des Verfahrens besonders einfach ist. Auch werden immer nur die Programmblöcke manipuliert, die gerade benötigt werden, wodurch die Ladezeit sehr gering ist.

Insbesondere kann das Betriebssystem eine virtuelle Speicherverwaltung aufweisen und der Seitenfehler ein spezifischer Seitenfehler der virtuellen Speicherverwaltung sein. Bei einem solchen Seitenfehler kann es sich um z. B. den Seitenfehler SEITE-NICHT-VORHANDEN oder SCHUTZ-SEITE handeln.

Der Seitenfehler SEITE-NICHT-VORHANDEN tritt auf, wenn während der Programmausführung auf einen Programmblock zugegriffen werden soll, der nicht im (physikalischen) Hauptspeicher vorhanden ist. Daher wird die Programmausführung unterbrochen und dies dem Exception-Handler des Betriebssystems mitgeteilt, der dafür sorgt, daß der Programmblock in den physikalischen Hauptspeicher geladen wird und die Programmausführung mit der Anweisung fortgesetzt wird, bei der der Seitenfehler auftrat. Beim Seitenfehler SCHUTZ-SEITE ist der entsprechende Programmblock zwar im physikalischen Hauptspeicher abgelegt, aber als SCHUTZ-SEITE markiert, auf die der Prozessor des Computers nicht zugreifen darf. Bei einem versuchten Zugriff wird daher der Seitenfehler SCHUTZ-SEITE erzeugt, die Programmausführung unterbrochen und der Seitenfehler dem Exception-Handler mitgeteilt. Dieser Seitenfehler kann von dem Exception-Handler selbst nicht behoben werden, aber es besteht die Möglichkeit, daß der Exception-Handler bei Auftreten eines von ihm nicht zu behebenden Seitenfehlers zu einer einstellbaren Adresse verzweigt. Diese Adresse wird durch den Hauptabschnitt so festgelegt, daß die Verzweigung zum Manipulationsmodul führt.

In einer bevorzugten Weiterbildung des erfindungsgemäßen Verfahrens ist das Programm auf einem zweiten Computer abgelegt und bewirkt das Manipulationsmodul bei der Manipulation eine Übertragung des ersten Programmblocks sowie gegebenenfalls des zumindest einen weiteren Programmblocks vom zweiten zum ersten Computer. Dadurch kann ein Herunterladen des Programms vom zweiten auf den ersten Computer und Starten des Programms beschleunigt werden, da zum Zeitpunkt der Ausführung und Einsetzbarkeit des Programms nur der Hauptabschnitt auf dem ersten Computer vorhanden sein muß. Sollte während der Programmausführung der erste Programmblock oder weitere Programmblöcke benötigt werden, die nicht im ersten Computer vorhanden sind, wird ein Nachladen mittels des Manipulationsmoduls bewirkt. Somit wird nur das übertragen, das auch tatsächlich während der Programmausführung benötigt wird.

Der zweite Computer kann dabei als einzelner Computer oder auch als ein Computernetzwerk verwirklicht sein. Insbesondere ist es auch möglich, daß der Hauptabschnitt einerseits und die Programmblöcke andererseits in unterschiedlichen Bereichen (z. B. mit verschiedenen Zugriffsrechten) des zweiten Computers abgelegt sind. Dies ist beispielsweise dann von Vorteil, wenn der Hauptabschnitt in einem Laufwerk des zweiten Computers abgelegt ist, wobei dieses Laufwerk ein gemapptes Laufwerk des ersten Computers ist (d. h., daß der erste Computer auf dieses Laufwerk so zugreifen kann, als sei es sein eigenes Laufwerk, obwohl das gemappte Laufwerk über eine Datenverbindung (z. B. Internet) mit dem ersten Computer verbunden ist). Da die Beschränkung von Zugriffsrechten des ersten Computers bezüglich des gemappten Laufwerks sehr schwierig bis unmöglich ist, könnte das Programm, wenn es auf dem gemappten Laufwerk abgelegt ist, leicht kopiert werden. Wenn jedoch die Programmblöcke auf z. B. einem anderen Laufwerk (mit eingeschränkten Zugriffsrechten) des zweiten Computers abgelegt sind, kann ein unerlaubtes Kopieren verhindert werden. Dies ist besonders für Anbieter interessant, die Software über ein Netzwerk (z. B. Internet) vermieten.

Weiter kann im Hauptabschnitt für den einen Programmblock ein Platzhalter vorgesehen sein, der kleiner als der eine Programmblock ist und im ersten Computer den von dem einen Programmblock benötigten Platz belegt, wobei der Platzhalter zusammen mit dem Manipulationsmodul vom zweiten zum ersten Computer übertragen wird und der vorbestimmte Seitenfehler erzeugt wird, wenn beim versuchten Zugriff auf den einen Programmblock ein Zugriff auf den einen Platzhalter versucht wird. Dieses Verfahren ist besonders bevorzugt, wenn der erste Computer vor dem Start des Programms eine Plausibilitätsprüfung dahingehend durchführt, ob die im Programm angegebene Programmgröße mit der tatsächlichen Programmgröße übereinstimmt. Durch den deutlich kleineren Platzhalter wird die Übertragungsdauer zum Programmstart verringert. Auch kann der Platzhalter den von dem einen Programmblock sowie den von dem zumindest einen weiteren Programmblock benötigten Platz belegen, wobei dann mit dem einen Programmblock auch noch der zumindest eine weitere Programmblock übertragen wird. Insbesondere kann für jeden Programmblock ein Platzhalter vorgesehen sein, wodurch die Übertragungszeit weiter verringert werden kann.

Ferner wird die Aufgabe durch ein Computerprogrammprodukt zur Ausführung auf einem Computer mit einem in (bevorzugt gleich große) Speicherseiten unterteilten Hauptspeicher gelöst, wobei das Computerprogrammprodukt mehrere Programmblöcke in Größe der Speicherseiten und einen Hauptabschnitt mit einem Manipulationsmodul umfaßt, das Softwarecode enthält, der bei Ausführung des Produkts auf dem Computer bei Vorhanden sein der erforderlichen Lizenz eine Manipulation eines der Programmblöcke dann bewirkt, wenn bei einem versuchten Zugriff auf den einen Programmblock ein vorbestimmter Seitenfehler erzeugt wird. Damit kann das Starten des Computerprogrammprodukts beschleunigt werden, da der eine Programmblock erst bei Zugriff auf diesen benötigt wird. So kann das bei der Manipulation z. B. durchgeführte Laden und/oder das Entschlüssein bei Bedarf durchgeführt werden, und muß nicht für das gesamte Programm zum Zeitpunkt des Programmstarts erfolgen.

Insbesondere kann (aufgrund des Softwarecodes) die Manipulation nur dann bewirkt werden, wenn während der Programmausführung noch kein Code des einen Programmblocks ausgeführt wurde. Dadurch ist vorteilhaft gewährleistet, daß die gewünschte Manipulation nur ein einziges Mal während der Programmausführung durchzuführen ist, so daß eine Verlangsamung der Programmausführung möglichst gering gehalten werden kann.

Eine besonders bevorzugte Weiterbildung des erfindungsgemäßen Computerprogrammprodukts besteht darin, daß (aufgrund des Softwarecodes) bei der Manipulation des einen Programmblocks auch noch zumindest ein weiterer der Programmblöcke manipuliert wird. Dieser zumindest eine weitere Programmblock kann bevorzugt ein solcher sein, der zusammen mit dem einen Programmblock ausgeführt wird, so daß eine effektive Manipulation von zusammengehörenden Programmblöcken erfolgen kann.

Weiter kann auf dem Computer ein Betriebssystem mit einem Exception-Handler installiert sein, dem der Seitenfehler mitgeteilt wird und der diesen an das Manipulationsmodul weiterleitet, wobei die Manipulation und dabei auch eine Behebung des den Seitenfehler bedingenden Zustandes durch das Manipulationsmodul bewirkt und danach dies dem Exception-Handler mitgeteilt wird. Damit läßt sich in einfacher Art und Weise das erfindungsgemäße Computerprogrammprodukt realisieren, da es auf den Exception-Handler des Betriebssystems aufsetzt.

Insbesondere kann das Betriebssystem eine virtuelle Speicherverwaltung aufweisen, wobei der Seitenfehler ein spezifischer Seitenfehler der virtuellen Speicherverwaltung ist, wobei der Seitenfehler vom Exception-Handler behebbar oder nicht behebbar sein kann. Bei dieser Ausführungsform ist es besonders einfach, eine Verzweigung vom Exception-Handler zum Manipulationsmodul zu realisieren. So kann der Hauptabschnitt Software-Code umfassen, der bei Ausführung auf dem Computer bewirkt, daß das Manipulationsmodul in den Ausführungspfad des Exception-Handlers eingebunden bzw. eingehängt wird.

Eine bevorzugte Ausführungsform des erfindungsgemäßen Computerprogrammprodukts besteht darin, daß, wenn das Computerprogrammprodukt auf einem zweiten Computer abgelegt ist, das Manipulationsmodul bei der Manipulation des einen (ersten) Programmblocks eine Übertragung von diesem vom zweiten zum ersten Computer bewirkt. Somit wird ein Laden nach Bedarf verwirklicht, so daß das Starten des Programms auf dem ersten Computer äußerst schnell durchgeführt werden kann.

Insbesondere kann im Hauptabschnitt für den einen Programmblock ein Platzhalter vorgesehen sein, der kleiner als der eine Programmblock ist und im ersten Computer den von dem einen Programmblock benötigten Platz belegt, wobei der Platzhalter zusammen mit dem Manipulationsmodul vom zweiten zum ersten Computer übertragen wird und der vorbestimmte Seitenfehler erzeugt wird, wenn der versuchte Zugriff auf den einen Programmblock ein versuchter Zugriff auf den einen Platzhalter ist. Auch kann für mehrere oder für alle Programmblöcke jeweils ein Platzhalter vorgesehen sein. Damit läßt sich das erfindungsgemäße Computerprogrammprodukt auch an einen Computer anpassen, der ein Programm nur dann startet, wenn das Betriebssystem auf das gesamte Programm zugreifen kann. Durch den/die Platzhalter wird dem Betriebssystem die tatsächliche Programmgröße vorgetäuscht, wobei zur Übertragung der Platzhalter deutlich weniger Zeit benötigt wird, als wenn das Programm mit den Programmblöcken übertragen werden müßte.

Ferner ist es möglich, daß der Platzhalter den von dem einen Programmblock sowie den von dem zumindest einen weiteren Programmblock benötigten Platz belegt, wobei dann mit dem einen Programmblock auch noch der zumindest eine weitere Programmblock übertragen wird.

Beim erfindungsgemäßen Computerprogrammprodukt kann der (bzw. die) Platzhalter mit einem den vorbestimmten Seitenfehler erzeugenden Attribut versehen sein. Dieses Attribut kann z. B. die Markierung als SCHUTZ-SEITE sein. Somit ist es besonders einfach, das erfindungsgemäße Computerprogrammprodukt zur Verfügung zu stellen und auch ist es dadurch leicht möglich, ein schon ausführbares Programm nachträglich so zu behandeln, daß es schnell gestartet werden kann. Es müssen lediglich für die gewünschten Programmblöcke Platzhalter mit dem Attribut und ein Hauptabschnitt vorgesehen werden, um das erfindungsgemäße Computerprogrammprodukt zu realisieren. Eine Kenntnis über Quellcode des zu behandelnden Programms ist nicht notwendig.

Das erfindungsgemäße Computerprogrammprodukt kann auf einem (lesbaren) Speichermedium abgelegt sein. Dies kann beispielsweise eine Diskette, eine CD, eine DVD, eine magnetoptische Platte, eine Festplatte oder ein Magnetband sein.

Die Erfindung wird nachfolgend anhand der Zeichnungen im Prinzip beispielshalber noch näher erläutert. Es zeigen:
Fig. 1 eine schematische Ansicht des erfindungsgemäßen Systems zum Ausführen eines auf einem ersten Computer abgelegten Programms auf einem zweiten Computer;
Fig. 2 eine prinzipielle Darstellung zur Erläuterung der virtuellen Speicherverwaltung;
Fig. 3 eine prinzipielle Darstellung der Speicherbelegung des Hauptspeichers 6 und
Fig. 4 eine weitere prinzipielle Darstellung der Speicherbelegung des Hauptspeichers 6.

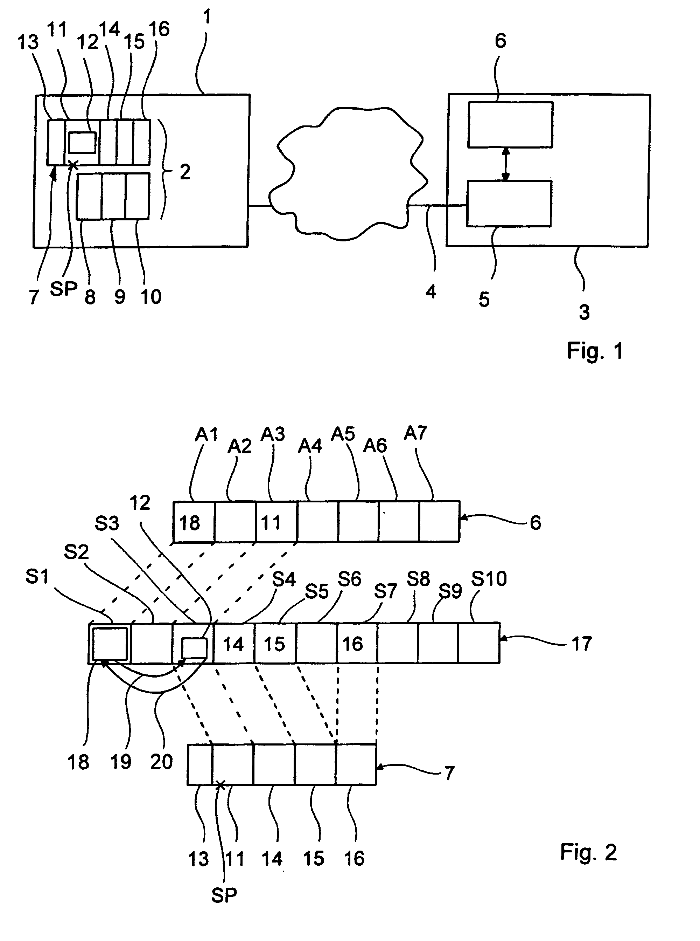

Das erfindungsgemäße Verfahren zum Ausführen eines Programms auf einem Computer kann bei einem in Fig. 1 gezeigten System angewendet werden, das einen ersten Computer 1, auf dem ein Programm 2 abgelegt ist, und einen zweiten Computer 3 aufweist, auf dem das Programm 2 ausgeführt werden soll. Der zweite Computer 3 ist über eine Datenverbindung 4, die beispielsweise eine Internet-Verbindung sein kann, mit dem ersten Computer 1 verbindbar.

Der zweite Computer 3 enthält die üblichen Hardware-Komponenten, wie z. B. Ein- und Ausgabeeinheiten, einen Prozessor, nicht-flüchtigen Speicher 5 (beispielsweise eine Festplatte) und (flüchtigen) Hauptspeicher 6. Von diesen Hardware-Komponenten sind in Fig. 1 nur der nicht-flüchtige Speicher 5 und der Hauptspeicher 6 eingezeichnet.

Ferner ist auf dem zweiten Computer 3 noch ein Betriebssystem mit einer sogenannten virtuellen Speicherverwaltung und einem sogenannten Exception-Handler installiert.

Bei der virtuellen Speicherverwaltung wird beim Start eines auszuführenden Programmes das Programm vom Betriebssystem in einen virtuellen Speicher (der deutlich größer als der Arbeitsspeicher 6 sein kann) allokiert. Der virtuelle Speicher und der Hauptspeicher sind jeweils in einzelne Speicherseiten (bevorzugt gleich große) unterteilt bzw. das Betriebssystem behandelt und verwaltet den virtuellen Speicher und den Hauptspeicher so, als würden sie aus den Speicherseiten bestehen, wobei eine einzelne Seite des virtuellen Speichers beispielsweise dann mit physikalischem Speicher abgedeckt wird (d. h. die Speicherseite wird in den Arbeitsspeicher 6 geladen und der Code der Speicherseite kann durch den Prozessor ausgeführt werden), wenn während der Programmausführung auf die Seite des virtuellen Speichers zugegriffen werden soll.

Um diese Speicherverwaltung für das Programm transparent durchzuführen, weist das Betriebssystem den Exception-Handler auf, der bei Auftreten eines Seitenfehlers aufgerufen wird. Ein Seitenfehler tritt dann auf, wenn während der Programmausführung auf eine Programmseite im virtuellen Speicher nicht zugegriffen werden kann, da die Programmseite beispielsweise nicht im Hauptspeicher abgelegt ist oder da die Programmseite 2 im Hauptspeicher 6 abgelegt ist, aber der Zugriff auf sie nicht erlaubt ist. In diesem Fall wird die Programmausführung unterbrochen und es wird ein entsprechender Seitenfehler erzeugt, der zusammen mit der Seitennummer der Seite des virtuellen Speichers, auf die zugegriffen werden soll, an den Exception-Handler des Betriebssystems übergeben wird. Wenn beispielsweise die Seite nicht im Hauptspeicher 6 vorhanden ist, wird der Seitenfehler SEITE-NICHT-VORHANDEN erzeugt und der Exception-Handler behebt in diesem Fall den Seitenfehler indem er die benötigte Seite in den Hauptspeicher 6 lädt und bewirkt, daß die Programmausführung an der Stelle (d. h. mit der Anweisung) fortgesetzt wird, an der der Seitenfehler auftrat. Da die Seite jetzt im Hauptspeicher 6 vorhanden ist, kann die Programmausführung fortgesetzt werden. Betriebssysteme mit virtueller Speicherverwaltung und Exception-Handler sind beispielsweise die 32 Bit-Betriebssysteme von Microsoft (wie z. B. Windows NT, Windows 2000, Windows 9x, Windows ME).

Das im ersten Rechner 1 abgelegte (ausführbare) Programm 2 enthält einen Hauptabschnitt 7 sowie mehrere Programmblöcke, von denen in Fig. 1 beispielhaft die Blöcke 8, 9 und 10 eingezeichnet sind. Die Größe der Programmblöcke 8 bis 10 ist dabei so gewählt, daß sie der Größe der Speicherseiten des virtuellen Speichers des zweiten Computers 3 entspricht.

Der Hauptabschnitt 7 enthält einen Startblock 11 mit einem Manipulationsmodul 12 und einen Informationsblock 13, in dem unter anderem die Informationen enthalten sind, die das Betriebssystem des zweiten Computers 3 zur Ausführung des Programms 2 benötigt. Dies ist beispielsweise die Programmgröße, der Programmstartpunkt SP im Startblock 11 und die Dateiart des Hauptabschnitts 7. Des weiteren enthält der Hauptabschnitt 7 für jeden der Programmblöcke 8 bis 10 einen Platzhalterabschnitt 14, 15, 16, die im zweiten Computer 3 jeweils so viel Speicherplatz benötigen, wie die zugeordneten Programmblöcke 8 bis 10, aber kleiner als die Programmblöcke 8 bis 10 sind. Wenn die Größe der Programmblöcke 8 bis 10 z. B. jeweils 32 kByte beträgt, kann jeder Platzhalter 14 bis 16 die Anweisung 32k x "0" enthalten, so daß die tatsächliche Größe eines Platzhalterabschnitts 14 bis 16 wesentlich geringer ist als der für ihn im zweiten Computer 3 zu reservierende Platz.

Ferner sind die Platzhalterabschnitte 14 bis 16 noch mit dem Attribut SCHUTZ-SEITE markiert, wodurch, wie im folgenden noch beschrieben wird, bei versuchtem Zugriff auf eine solche, in den Hauptspeicher 6 geladene Seite ein Seitenfehler SCHUTZ-SEITE (GUARD-PAGE) erzeugt wird, der vom Exception-Handler nicht behoben werden kann.

Wenn nun der Benutzer des zweiten Computers 3 das Programm 2 auf seinem Computer 3 ausführen will, wird nicht das gesamte Programm 2 über die Datenverbindung 4 auf den zweiten Computer 3 geladen. Statt dessen wird aufgrund der beschriebenen Programmstruktur des Programms 2 zuerst nur der Hauptabschnitt 7 zum zweiten Computer 3 übertragen und in diesem temporär abgelegt, z. B. im nicht flüchtigen Speicher 5. Die Übertragungszeit des Hauptabschnitts 7 ist deutlich geringer als die des gesamten Programms, da die Platzhalter kleiner als die Programmblöcke sind und somit das zu übertragende Datenvolumen stark reduziert ist.

Da im Informationsblock 11 des Hauptabschnitts 7 die Programmgröße angegeben ist und diese Größe auch mittels der Platzhalterabschnitte 14, 15, 16 im nicht-flüchtigen Speicher 5 beansprucht wird, wird bei der vor Ausführung des Programms 2 mittels des Betriebssystems durchgeführten Allokierung im virtuellen Speicher für die einzelnen Programmblöcke 8 bis 10 der notwendige Platz reserviert. Auch wird dem Betriebssystem aufgrund der Platzhalter 14 bis 16 die tatsächliche Programmgröße vorgetäuscht, so daß das Betriebssystem bei einer vor der Reservierung des virtuellen Speichers eventuell durchgeführten Plausibilitätsüberprüfung von angegebener Programmgröße zu tatsächlicher Programmgröße zu einem positiven Ergebnis kommt und nicht schon zu diesem Zeitpunkt die gewünschte Programmausführung abbricht.

In Fig. 2 ist die Allokierung des Programms 2 im virtuellen Speicher 17, der in die gleichgroßen Speicherseiten S1 bis S10 unterteilt ist, schematisch dargestellt. So ist der Startblock 11 der Speicherseite S3 zugeordnet und für die Platzhalter 14 bis 16 sind die Speicherseiten S4, S5 und S7 reserviert. Da der Programmstartpunkt SP im Startblock 11 liegt, ist die dem Startblock 11 zugeordnete Speicherseite S3 mit Hauptspeicher 6 (Speicherblock A3) abgedeckt. Weiter ist in der Speicherseite S1 des virtuellen Speichers 17 der Exception-Handler 18 des Betriebssystems eingezeichnet, der im Speicherblock A1 des Hauptspeichers 6 abgelegt ist.

Der Startblock 11 enthält eine erste Routine, mit der das Manipulationsmodul 12 in den Ausführungspfad des Exception-Handlers 18 eingehängt wird. Dazu wird z. B. eine Umleitung über das Manipulationsmodul 12 erzeugt (wie durch die Pfeile 19 und 20 angedeutet ist). Somit wird das Manipulationsmodul 12 über Seitenfehler informiert und kann, falls nötig, eingreifen.

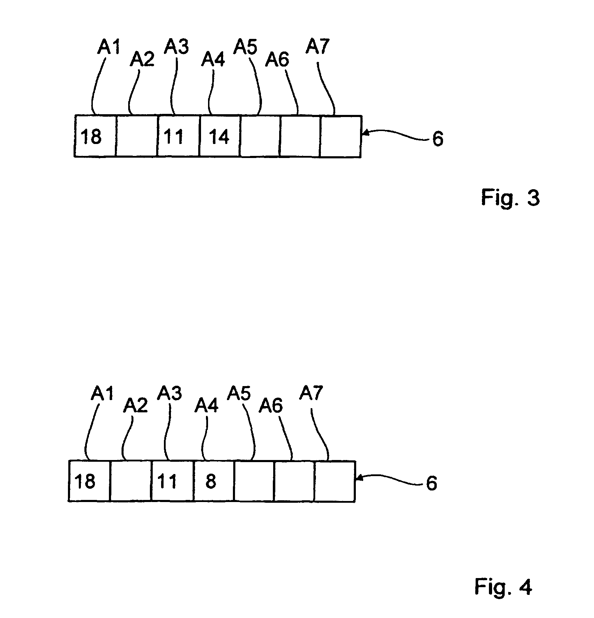

Wenn nun während der Programmausführung beispielsweise in dem in Fig. 2 gezeigten Zustand auf den Programmblock 8 zugegriffen werden soll, wird die Programmausführung unterbrochen und wird der Seitenfehler SEITE-NICHT-VORHANDEN erzeugt, da weder der Programmblock 8 noch der Platzhalter 14 (der für den zweiten Computer 3 der benötigte Programmblock ist) im Hauptspeicher 6 abgelegt sind. Der Seitenfehler SEITE-NICHT-VORHANDEN und die entsprechende Seitenadresse im virtuellen Speicher werden dem Exception-Handler 18 mitgeteilt, der dann dafür sorgt, daß der fehlende Programmblock und somit hier der Platzhalter 14 in den Hauptspeicher 6 (z. B. in den Speicherblock A4) geladen wird, wie in Fig. 3 schematisch dargestellt ist. Ferner bewirkt der Exception-Handler 18, daß das Programm 2 an der Stelle (bzw. mit der Anweisung) fortgesetzt wird, an der der Seitenfehler erzeugt wurde.

Bei dem dadurch bedingten nochmaligen Versuch des Zugriffs wird wieder die Programmausführung unterbrochen und ein Seitenfehler wird erzeugt, da der Platzhalter 14 mit dem Attribut SCHUTZ-SEITE markiert ist. Der erzeugte Seitenfehler SCHUTZ-SEITE wird an den Exception-Handler 18 übergeben, der feststellt, daß er diesen Seitenfehler nicht behandeln kann. Statt dessen wird aufgrund des im Ausführungspfad des Exception-Handlers 18 eingehängten Manipulationsmoduls 12 zu diesem verzweigt, wie durch den Pfeil 19 angedeutet ist. Das Manipulationsmodul 12 erhält vom Exception-Handler 18 auch noch die Information, bei welchem Programmblock (bzw. bei welcher Speicherseite im virtuellen Speicher 17) der Seitenfehler erzeugt wurde. Mit dieser Information bewirkt das Manipulationsmodul 12 ein Laden des entsprechenden Programmblocks über die Datenverbindung 4 in den Hauptspeicher 6 (hier in den Speicherblock A4, wie in Fig. 4 dargestellt ist) und übergibt zurück an den Exception-Handler 18, der die Wiederholung der Anweisung bewirkt, die zum Seitenfehler geführt hat. Nun kann auf den Programmblock 8 zugegriffen werden, so daß die Programmausführung fortgesetzt werden kann.

In dieser Art und Weise können auch große Programme sehr schnell auf dem zweiten Computer 3 ausgeführt werden, da zum Zeitpunkt des Programmstarts lediglich der kleine Hauptabschnitt 7 zum zweiten Computer 3 übertragen sein muß. Alle anderen benötigten Programmblöcke 8, 9, 10 können im Laufe der Programmausführung nach Bedarf nachgeladen werden. Natürlich kann beim obigen Verfahren zum Startzeitpunkt der Startblock 11 noch nicht im Hauptspeicher 6 abgelegt sein. Der versuchte Zugriff auf den Startblock 11 beim Start wird dann zum Seitenfehler SEITE-NICHT-VORHANDEN führen, der in der beschriebenen Weise vom Exception-Handler 18 behoben wird.

In einer bevorzugten Weiterbildung kann beim Nachladen der Programmblöcke 8 bis 10 mittels des Manipulationsmoduls 8 auch noch eine Entschlüsselung und/oder eine Dekomprimierung durchgeführt werden, so daß in vorteilhafter Weise immer der Programmblock entschlüsselt und/oder dekomprimiert wird, der gerade benötigt wird. Dadurch wird die Zeit zwischen dem Programmaufruf durch den Benutzer und dem Zeitpunkt, zu dem das Programm tatsächlich zur Verfügung steht, deutlich verkürzt.

Das erfindungsgemäße Verfahren kann auch dazu eingesetzt werden, um das Programm 2 möglichst schnell auf dem Computer auszuführen, auf dem es abgelegt ist. In diesem Fall ist das Programm 2 bevorzugt mit einem Software-Kopierschutz versehen. Das bedeutet, daß die Programmausführung nur dann möglich ist, wenn eine Lizenz vorliegt. Der Ablauf ist prinzipiell der gleiche wie bei dem oben beschriebenen Verfahren, nur mit dem Unterschied, daß nun keine Übertragung über die Datenverbindung 4 nötig ist.

Bei Ausführung des Programms wird somit der Startblock 11 in den Hauptspeicher des Computers geladen. Wenn während der Ausführung nun auf den Programmblock 8 zugegriffen werden soll, wird der Seitenfehler SEITE-NICHT-VORHANDEN erzeugt, da der entsprechende Platzhalter 14 nicht im Hauptspeicher liegt. Dieser Seitenfehler wird mit dem Exception-Handler des Betriebssystems mitgeteilt, der bewirkt, daß der Platzhalter 14 in den Hauptspeicher geladen wird. Dann wird die Programmausführung an der Unterbrechungsstelle wieder aufgenommen, so daß nochmals der Zugriff auf die Speicherseite 14 versucht wird. Da diese mit dem Attribut SCHUTZ-SEITE versehen ist, wird wiederum ein Seitenfehler (jetzt der Seitenfehler SCHUTZ-SEITE) erzeugt und dem Exception-Handler mitgeteilt. Dieser kann diesen Seitenfehler nicht beheben und es wird zum Manipulationsmodul 12 verzweigt.

Das Manipulationsmodul 12 kann nun beispielsweise überprüfen, ob die notwendige Lizenz vorhanden ist. Wenn dies nicht der Fall ist, wird die Programmausführung abgebrochen. Wenn jedoch die Lizenz vorliegt, wird das Laden des Programmblocks 8 in den Hauptspeicher bewirkt, und es wird über den Exception-Handler zu der Programmanweisung zurückverzweigt, die den Seitenfehler erzeugt hat.

Alternativ kann der Programmblock 8 verschlüsselt abgelegt sein, und das Manipulationsmodul führt noch eine Entschlüsselung des Programmblocks 8 durch, so daß dann der entschlüsselte Programmblock im Hauptspeicher abgelegt ist.

Mit diesem Verfahren kann die Überprüfung der Laufberechtigung des Programms 2 und auch gegebenenfalls die notwendige Entschlüsselung immer erst dann durchgeführt werden, wenn der entsprechende Programmblock auch tatsächlich benötigt wird. Damit ist es nicht mehr nötig, alle Programmblöcke bei Aufruf des Programms 2 erst einmal zu entschlüsseln, um das Programm für den Anwender nutzbar zu machen.

Ferner ist es auch möglich, daß der Hauptabschnitt 7 keine Platzhalter enthält, und daß statt dessen die Programmblöcke 8 bis 10 jeweils mit dem Attribut SCHUTZ-SEITE versehen sind. Dadurch wird beim Zugriff auf die Programmblöcke 8 bis 10, wenn diese im Hauptspeicher abgelegt sind, der Seitenfehler SCHUTZ-SEITE erzeugt, der vom Exception-Handler nicht behoben werden kann, so daß im Rahmen der Seitenfehlerbehandlung zum Manipulationsmodul 12 verzweigt wird. Dies prüft, ob die Lizenz vorliegt, und wenn dies der Fall ist, teilt das Manipulationsmodul 12 dem Exception-Handler mit, daß der Seitenfehler behoben ist, und mittels des Exception-Handlers wird mit der Anweisung, die den Seitenfehler bedingte, die Programmausführung wieder aufgenommen, und der Prozessor des Computers kann nun auf den Programmblock zugreifen. Wenn das Manipulationsmodul 12 bei der Überprüfung feststellt, daß keine Lizenz vorliegt, wird ein Abbruch der Programmausführung bewirkt. Dies kann beispielsweise dadurch erfolgen, daß das Manipulationsmodul dem Exception-Handler mitteilt, daß es den Seitenfehler nicht beheben kann. Nachdem der Seitenfehler auch nicht vom Exception-Handler behoben werden kann, bewirkt dieser den Programmabbruch.

Statt dem oben beschriebenen Attribut SCHUTZ-SEITE kann bei den beschriebenen Ausführungsformen auch jedes andere Attribut verwendet werden, das zu einem Seitenfehler führt, den der Exception-Handler nicht beheben kann. Das Manipulationsmodul 12 kann auch so in den Ausführungspfad des Exception-Handlers eingehängt werden, daß es alle Seitenfehler, die bei der Ausführung des Programms auftraten, oder generell alle Seitenfehler mitgeteilt bekommt. In diesem Fall kann das Manipulationsmodul z. B. schon beim Seitenfehler SEITE-NICHT-VORHANDEN eingreifen.

Der Startabschnitt 7 mit dem Manipulationsmodul kann für ein schon vorhandenes ausführbares Programm im Wege eines aus dem Softwarekopierschutz bekannten Verfahrens der Umhüllung (wrapping) erzeugt werden, so daß sich das erfindungsgemäße Verfahren auch leicht bei schon übersetzten (ausführbaren) Programmen anwenden läßt. Ferner ist es natürlich auch möglich, die Programme gleich so zu erstellen, daß das erfindungsgemäße Verfahren durchführbar ist (indem beispielsweise der Compiler entsprechend angepaßt wird).

## Patentansprüche

1. Verfahren zum Ausführen eines Programms (2) auf einem Computer (3) mit einem in Speicherseiten unterteilten Hauptspeicher (6), wobei das Programm mehrere Programmblöcke (8, 9, 10) in Größe der Speicherseiten sowie einen Hauptabschnitt (7) mit einem Manipulationsmodul (12) enthält und das Verfahren folgende Schritte aufweist:
Laden des Hauptabschnitts (7) in den Hauptspeicher (6) und Auführen des Hauptabschnitts (7), dessen Manipulationsmodul (12) bei Vorhandensein der erforderlichen Lizenz eine Manipulation eines der Programmblöcke (8, 9, 10) dann bewirkt, wenn bei einem versuchten Zugriff auf den einen Programmblock (8, 9, 10) ein vorbestimmter Seitenfehler erzeugt wird.

2. Verfahren nach Anspruch 1, wobei die Manipulation nur dann bewirkt wird, wenn während der Programmausführung noch kein Code des einen Programmblocks (8) ausgeführt wurde.

3. Verfahren nach Anspruch 1 oder 2, wobei bei der Manipulation neben der Manipulation des einen Programmblocks (8, 9, 10) auch noch zumindest ein weiterer der Programmblöcke manipuliert wird.

4. Verfahren nach einem der Ansprüche 1 bis 3, wobei die Manipulation ein Laden des einen Programmblocks (8) sowie gegebenenfalls des zumindest einen weiteren Programmblocks in den Hauptspeicher und/oder ein Entschlüsseln des einen Programmblocks (8) sowie gegebenenfalls des zumindest einen weiteren Programmblocks umfaßt.

5. Verfahren nach einem der Ansprüche 1 bis 4, wobei auf dem Computer (3) ein Betriebssystem mit einem Exception-Handler (18) installiert ist und beim versuchten Zugriff die Programmausführung unterbrochen, der Seitenfehler dem Exception-Handler (18) mitgeteilt und von diesem an das Manipulationsmodul (12) weitergeleitet wird, das die Manipulation und eine Behebung eines den Seitenfehler bedingenden Zustandes bewirkt und danach zum Exception-Handler (18) zurück verzweigt, wobei das Betriebssystem insbesondere eine virtuelle Speicherverwaltung aufweist und der Seitenfehler ein spezifischer Seitenfehler der virtuellen Speicherverwaltung ist.

6. Verfahren nach einem der Ansprüche 1 bis 5, wobei das Programm (2) auf einem zweiten Computer (1) abgelegt ist und das Manipulationsmodul (12) bei der Manipulation eine Übertragung des einen Programmblocks (8) vom zweiten zum ersten Computer (1; 3) bewirkt, und wobei bevorzugt noch im Hauptabschnitt (7) für den einen Programmblock (8) ein Platzhalter (14) vorgesehen ist, der kleiner ist als der eine Programmblock (8) und im ersten Computer (3) den von dem einen Programmblock (8) benötigten Platz belegt, wobei der Platzhalter (14) zusammen mit dem Manipulationsmodul (12) vom zweiten zum ersten Computer (1; 3) übertragen wird, und wobei der vorbestimmte Seitenfehler erzeugt wird, wenn beim versuchten Zugriff auf den einen Programmblock (8) versucht wird, auf den ersten Platzhalter (14) zuzugreifen.

7. Computerprogrammprodukt zur Ausführung auf einem Computer (3) mit einem in Speicherseiten unterteilten Hauptspeicher (6), wobei das Computerprogrammprodukt mehrere Programmblöcke (8, 9, 10) in Größe der Speicherseiten und einen Hauptabschnitt (7) mit einem Manipulationsmodul (12) umfaßt das Softwarecode enthält, der bei Ausführung auf dem Computer (3) bei Vorhanden sein der erforderlichen Lizenz eine Manipulation eines der Programmblöcke (8) dann bewirkt, wenn bei einem versuchten Zugriff auf den einen Programmblock (8) ein vorbestimmter Seitenfehler erzeugt wird.

8. Computerprogrammprodukt nach Anspruch 7, wobei die Manipulation nur dann bewirkt wird, wenn während der Programmausführung noch kein Code des einen Programmblocks (8) ausgeführt wurde.

9. Computerprogrammprodukt nach Anspruch 7 oder 8, wobei bei der Manipulation neben der Manipulation des einen Programmblocks auch noch zumindest ein weiterer der Programmblöcke manipuliert wird.

10. Computerprogrammprodukt nach einem der Ansprüche 7 bis 9, wobei die Manipulation ein Laden des ersten Programmblocks (8) sowie gegebenenfalls des zumindest einen weiteren Programmblocks in den Hauptspeicher (6) und/oder ein Entschlüsseln des einen Programmblocks (8) sowie gegebenenfalls des zumindest einen weiteren Programmblocks umfaßt.

11. Computerprogrammprodukt nach einem der Ansprüche 7 bis 10, wobei auf dem Computer (3) ein Betriebssystem mit einem Exception-Handler (18) installiert ist, dem der Seitenfehler mitgeteilt wird und der diesen an das Manipulationsmodul (12) weiterleitet, wobei die Manipulation und eine Behebung eines den Seitenfehler bedingenden Zustandes bewirkt und danach dies dem Exception-Handler (18) mitgeteilt wird, wobei das Betriebssystem insbesondere eine virtuelle Speicherverwaltung aufweist und der vorbestimmte Seitenfehler ein spezifischer Seitenfehler der virtuellen Speicherverwaltung ist.

12. Computerprogrammprodukt nach einem der Ansprüche 7 bis 11, wobei, wenn das Computerprogrammprodukt auf einem zweiten Computer (1) abgelegt und der Hauptabschnitt (7) zum ersten Computer (3) übertragen ist, das Manipulationsmodul (12) bei der Manipulation des einen Programmblocks (8) eine Übertragung von diesem vom zweiten zum ersten Computer (1; 3) bewirkt, und wobei bevorzugt noch im Hauptabschnitt (7) für den einen Programmblock (8) ein Platzhalter (14) vorgesehen ist, der kleiner ist als der eine Programmblock (8) und im ersten Computer (3) den von dem einen Programmblock (8) benötigten Platz belegt, wobei der vorbestimmte Seitenfehler erzeugt wird, wenn beim versuchten Zugriff auf den einen Programmblock (8) versucht wird, auf den Platzhalter (14) zuzugreifen.

13. Computerprogrammprodukt nach Anspruch 12, wobei der Platzhalter (14) mit einem den Seitenfehler erzeugenden Attribut versehen ist.

## Claims

1. A method of executing a program (2) on a computer (3) comprising a main memory (6) divided into memory pages, wherein the program contains a plurality of program blocks (8, 9, 10) of the same size as the memory pages as well as a main section (7) having a manipulating module (12) and the method comprises the steps of:
loading the main section (7) into the main memory (6) and executing the main section (7), whose manipulating module (12), in the presence of the required licence, causes manipulation of one of the program blocks (8, 9, 10) if, upon an attempt to access said one program block (8, 9, 10), a predetermined page error is generated.

2. The method as claimed in Claim 1, wherein the manipulation is effected only if, during execution of the program, no code of said one program block (8) has been executed yet.

3. The method as claimed in Claim 1 or 2, wherein, during said manipulation, at least one more of the program blocks is manipulated in addition to manipulating said one program block (8, 9, 10).

4. The method as claimed in any one of Claims 1 to 3, wherein said manipulation comprises loading said one program block (8) as well as, optionally, said at least one more program block into the main memory and/or decrypting said one program block (8) as well as, optionally, said at least one more program block.

5. The method as claimed in any one of Claims 1 to 4, wherein an operating system comprising an exception handler (18) is installed on the computer (3) and, upon said access attempt, the execution of the program is interrupted, the page error is communicated to the exception handler (18) and is forwarded by it to the manipulating module (12), which effects said manipulation and removal of the condition causing said page error and, thereafter, branches back to the exception handler (18), the operating system comprising, in particular, a virtual memory management and the page error being a specific page error of the virtual memory management.

6. The method as claimed in any one of Claims 1 to 5, wherein the program (2) is stored on a second computer (1) and the manipulating module (12) effects a transmission of said one program block (8) from the second to the first computer (1; 3) during manipulation, and wherein, preferably, in the main section (7) for said one program block (8) a placeholder (14) is additionally provided, which is smaller than said one program block (8) and occupies the space required by said one program block (8) in the first computer (3), the placeholder (14) being transmitted together with the manipulating module (12) from the second to the first computer (1; 3), and wherein the predetermined page error is generated if, while attempting to access said one program block (8), an attempt is made to access the first placeholder (14).

7. A computer program product for execution on a computer (3) comprising a main memory (6) divided into pages, wherein the computer program product comprises a plurality of program blocks (8, 9, 10) of the same size as the pages and a main section (7) having a manipulating module (12), containing software code which, upon execution on the computer (3), in the presence of the required licence, causes manipulation of one of the program blocks (8) if, upon an attempt to access said one program block (8), a predetermined page error is generated.

8. The computer program product as claimed in Claim 7, wherein the manipulation is effected only if, during execution of the program, no code of said one program block (8) has been executed yet.

9. The computer program product as claimed in Claim 7 or 8, wherein, during said manipulation, at least one more of the program blocks is manipulated in addition to manipulating said one program block.

10. The computer program product as claimed in any one of Claims 7 to 9, wherein the manipulation comprises loading the first program block (8) as well as, optionally, said at least one more program block into the main memory (6) and/or decrypting said one program block (8) as well as, optionally, said at least one more program block.

11. The computer program product as claimed in any one of Claims 7 to 10, wherein an operating system, which comprises an exception handler (18) and to which the page error is communicated, is installed on the computer (3), said operating system forwarding said page error to the manipulating module (12), wherein the manipulation and a removal of the condition causing said page error is effected, and this is then communicated to the exception handler (18), said operating system comprising, in particular, a virtual memory management and the predetermined page error being a specific page error of the virtual memory management.

12. The computer program product as claimed in any one of Claims 7 to 11, wherein, when the computer program product is stored on a second computer (1) and the main section (7) has been transmitted to the first computer (3), the manipulating module (12), while manipulating said one program block (8), effects transmission thereof from the second to the first computer (1; 3), and wherein, preferably, in the main section (7) a placeholder (14) is additionally provided for said one program block (8), which is smaller than said one program block (8) and occupies the space required by said one program block (8) in the first computer (3), the predetermined page error being generated if, upon attempting to access said one program block (8), an attempt is made to access the placeholder (14).

13. The computer program product as claimed in Claim 12, wherein the placeholder (14) is provided with an attribute generating the page error.

## Revendications

1. Procédé d'exécution d'un programme (2) sur un ordinateur (3), avec une mémoire principale (6) divisée en pages de mémoire, le programme contenant plusieurs blocs de programmes (8, 9, 10) de la dimension des pages de mémoire, ainsi qu'une section principale (7) équipée d'un module de manipulation (12) et le procédé présentant les étapes suivantes :
chargement de la section principale (7) dans la mémoire principale (6) et exécution de la section principale (7), dont le module de manipulation (12), en cas de possession de la licence requise, provoque une manipulation de l'un des blocs de programmes (8, 9, 10) lorsqu'en cas d'essai d'accès à l'un des blocs de programmes (8, 9, 10) un défaut de page prédéfini est généré.

2. Procédé selon la revendication 1, dans lequel la manipulation n'est provoquée que si aucun code de l'un des blocs de programmes (8) n'a encore été exécuté en cours de déroulement du programme.

3. Procédé selon l'une quelconque des revendication 1 ou 2, dans lequel lors de la manipulation, simultanément à la manipulation de l'un des blocs de programmes (8, 9, 10), encore au moins un bloc de programmes supplémentaire est manipulé.

4. Procédé selon l'une quelconque des revendications 1 à 3, dans lequel la manipulation comprent le chargement de l'un des blocs de programmes (8), ainsi que le cas échéant dudit au moins un des blocs de programmes supplémentaires dans la mémoire principale et/ou un décodage de l'un des blocs de programmes (8), ainsi que le cas échéant dudit au moins un des blocs de programmes supplémentaires.

5. Procédé selon l'une quelconque des revendications 1 à 4, dans lequel un système d'exploitation muni d'un exception handler (18) est installé sur l'ordinateur (3) et lors de l'essai d'accès, l'exécution du programme est interrompue, le défaut de page est signalé à l'exception handler (18) et transmis par ce dernier au module de manipulation (12), qui provoque la manipulation et remédie à l'un des états conditionnant le défaut de page puis dérive en retour vers l'exception handler (18), le système d'exploitation présentant en particulier une gestion virtuelle de la mémoire et le défaut de page étant un défaut de page spécifique de la gestion virtuelle de la mémoire.

6. Procédé selon l'une quelconque des revendications 1 à 5, dans lequel le programme (2) se situe sur un second ordinateur (1) et lors de la manipulation, le module de manipulation (12) provoque un transfert de l'un des blocs de programmes (8) du second ordinateur vers le premier ordinateur (1 ; 3), et de préférence encore dans la section principale (7) un emplacement (14) qui est plus petit que l'un des blocs de programme (8) étant prévu pour l'un des blocs de programmes (8) et occupant dans le premier ordinateur (3) la place nécessitée par l'un des blocs de programmes (8), l'emplacement (14) étant transféré avec le module de manipulation (12), du second vers le premier ordinateur (1 ; 3) et le défaut de page prédéfini étant généré lorsqu'en cas d'essai d'accès à l'un des blocs de programmes (8), l'on essaie d'accéder au premier emplacement (14).

7. Programme informatique destiné à être exécuté sur un ordinateur (3), avec une mémoire principale (6), divisée en pages de mémoire, le programme informatique comprenant plusieurs blocs de programmes (8, 9, 10) de la dimension des pages de mémoire et une section principale (7), équipée d'un module de manipulation (12) contenant le code de logiciel, qui lors de l'exécution sur l'ordinateur (3) et en cas de présence de la licence requise provoque une manipulation de l'un des blocs de programmes (8), lorsque lors d'un essai d'accès à l'un des blocs de programmes (8), un défaut de page prédéfini est généré.

8. Programme informatique selon la revendication 7, dans lequel la manipulation n'est provoquée que lorsqu'en cours d'exécution du programme, aucun code de l'un des blocs de programmes (8) n'a encore été exécuté.

9. Programme informatique selon l'une quelconque des revendications 7 ou 8, dans lequel lors de la manipulation, au mois encore un bloc de programmes supplémentaire est manipulé, simultanément à la manipulation de l'un des blocs de programmes.

10. Programme informatique selon l'une quelconque des revendications 7 à 9, dans lequel la manipulation comprent le chargement du premier bloc de programmes (8), ainsi que le cas échéant celui dudit au moins un bloc de programmes supplémentaires dans la mémoire principale (6) et/ou un décodage de l'un des blocs de programmes (8), ainsi que le cas échéant dudit au moins un des blocs de programmes supplémentaires.

11. Programme informatique selon l'une quelconque des revendications 7 à 10, dans lequel un système d'exploitation muni d'un exception handler, auquel le défaut de page est signalé et qui transmet ce dernier au module de manipulation (12) est installé. sur l'ordinateur (3), la manipulation et la correction d'un état conditionnant le défaut de page étant provoqués, puis ce fait étant signalé à l'exception handler (18), le système d'exploitation présentant en particulier une gestion de mémoire virtuelle et le défaut de page prédéfini étant un défaut de page spécifique de la gestion de mémoire virtuelle.

12. Programme informatique selon l'une quelconque des revendications 7 à 11, dans lequel lorsque le programme informatique est disposé sur un second ordinateur (1) et la section principale (7) est transmise vers le premier ordinateur (3), lors de la manipulation de l'un des blocs de programmes (8), le module de manipulation (12) provoque un transfert de ce dernier du second ordinateur vers le premier ordinateur (1 ; 3) et un emplacement (14) qui est plus petit que l'un des blocs de programmes (8) étant prévu de préférence encore dans la section principale (7) pour l'un des blocs de programmes (8) et occupant la place nécessitée par l'un des blocs de programmes (8) dans le premier ordinateur (3), le défaut de page prédéfini étant généré lorsqu'en cas d'essai d'accès au premier bloc de programmes (8), l'on essaie d'accéder au premier emplacement (14).

13. Programme informatique selon la revendication 12, dans lequel l'emplacement (14) est muni d'un attribut générant le défaut de page.
